# EUROPÄISCHE PATENTANMELDUNG

(11) **EP 1 707 046 A1**
(43) Veröffentlichungstag der Anmeldung: **04.10.2006**
(21) Anmeldenummer: 06111835.2
(22) Anmeldetag: 28.03.2006
(51) Int. Cl.: A01F 15/07

(54) **Ladevorrichtung**

(30) Priorität: 02.04.2005 DE 102005015225
(71) Anmelder: Deere & Company, Moline, IL 61265-8098 (US)
(72) Erfinder: Chapon, Emmanuel, 70100, Velet (FR); Viaud, Jean, 70100, Gray (FR); Camus, Benoit, 70800, Bourguignon-les-Conflans (FR)
(74) Vertreter: Magin, Ludwig Bernhard

(57) **Zusammenfassung**

Es wird eine Ladevorrichtung (34) für die Hüllmittelrolle (32) einer Umhüllungsvorrichtung (18) vorgeschlagen, bei der die Hüllmittelrolle (32) auf einen Träger (38) aufgelegt und in einen Betriebszustand bewegt werden kann, wo sie mittels einer Rolle (76) in Position gehalten wird. Die Rolle (76) wird von einer Betätigungsvorrichtung (50) in eine Betriebsstellung gebracht, sobald der Träger (38) aus seiner Ladestellung bewegt wird.

## Beschreibung

Die Erfindung betrifft eine Ladevorrichtung einer Umhüllungsvorrichtung, insbesondere einer Rundballenpresse, für eine Hüllmittelrolle.

Im Stand der Technik sind verschiedene Vorrichtungen bekannt, mit denen eine Hüllmittelrolle in die Umhüllungsvorrichtung z.B. einer Rundballenpresse eingesetzt werden kann. So zeigt z.B. die EP 1 099 366 A1 eine Ladevorrichtung, bei der eine Hüllmittelrolle auf einen Träger aufgelegt und mit diesem in eine Betriebsstellung gebracht werden kann.

Das der Erfindung zugrunde liegende Problem wird darin gesehen, dass es nach dem Einlegen der Hüllmittelrolle noch weiterer Handgriffe bedarf bis die Umhüllungsvorrichtung betriebsbereit ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Dadurch, dass die Ladevorrichtung einen Träger zur Aufnahme der Hüllmittelrolle, der zwischen einer Ladestellung und einer Betriebsstellung bewegbar ist, eine Betätigungsvorrichtung, die geeignet ist, die Umhüllungsvorrichtung in einen Zustand zu versetzen, in dem Hüllmittel von der Hüllmittelrolle abgenommen werden kann, und Mittel enthält, die die Betätigungsvorrichtung abhängig von der Stellung des Trägers aktivieren, wird sie mit einem Handgriff, nämlich durch die Bewegung des Trägers betriebsbereit gemacht. Dieser Vorteil vereinfacht die Bedienung, stellt sicher, dass bei hochgeklapptem Träger die Ladevorrichtung betriebsbereit ist und spart Zeit. Die Stellung des Trägers kann sowohl mechanisch wie auch elektrisch oder hydraulisch auf die Betätigungsvorrichtung übertragen werden, unter anderem durch Schalter oder mechanische Folgeglieder.

Während einfach und gut zugängliche Träger mechanisch, also per Hand zwischen ihren Stellungen geschwenkt werden können, ist es insbesondere bei Trägern mit hohem Gewicht und/oder schlechter Zugänglichkeit von Vorteil, wenn dessen Verstellung motorisch durchgeführt werden kann.

Wenn die Betätigungsvorrichtung als eine Feder, insbesondere als eine Gasdruckfeder ausgebildet ist, kann diese von einer Bedienungsperson oder auch mittels einer von der Maschine, an der sich die Ladevorrichtung befindet, abgeleiteten Bewegung gespannt und bei Bedarf entspannt werden. Andererseits kann die Betätigungsvorrichtung auch als ein Motor ausgebildet sein, der in einer oder zwei Richtungen aktivierbar ist.

Da der Träger lediglich die Aufgabe hat, eine Hüllmittelrolle zu tragen und zu positionieren und später mit seiner Bewegung die Ladevorrichtung betriebsbereit zu machen, kann auch ein Zwischenträger vorgesehen werden, auf dem die Hüllmittelrolle ruht und mit dem diese in eine Betriebsstellung gebracht werden kann. Diese Bewegung kann wiederum manuell oder motorisch durchgeführt werden.

Um eine Umhüllungsvorrichtung in einen Betriebszustand zu versetzen, werden in sinnvoller Weise Rollen vorgesehen, die die Position der Hüllmittelrolle sichern und die mittels eines oder mehrerer Gestänge/s gegenüber der Hüllmittelrolle bewegbar sind. Dabei kann/können die eine oder die mehreren Rollen bremsbar oder antreibbar oder frei drehend ausgebildet sein, und bei dem Gestänge handelt es sich einfacherweise um einen oder mehrere Lenker, die um ortsfeste Lager schwenken. Dessen ungeachtet, können aber auch elektrisch oder hydraulisch verstellbare Rollen vorgesehen werden.

Insbesondere dann, wenn auf den Träger äußere Kräfte wirken, z.B. eine Betätigungsvorrichtung mit einem Kraftspeicher, ist es von Vorteil, wenn er zur Sicherheit einer Bedienungsperson in wenigstens einer Endstellung gesichert werden kann. Ein hierzu vorgesehener Riegel kann mechanisch ausgebildet und/oder in einer oder beiden Richtung/en vorgespannt oder mittels Fremdkraft bewegbar sein.

Damit der gegebenenfalls vorhandene Riegel gemeinsam mit dem Träger von einer Bedienungsperson bewegt werden kann, ist eine Riegelbetätigungsvorrichtung vorgesehen, die sich dort befindet, wo eine Bedienungsperson auch den Träger erfassen würde.

Eine Möglichkeit, die Ladevorrichtung in einen betriebsmäßigen Zustand zu bringen, besteht darin, dass die Mittel, die die Betätigungsvorrichtung abhängig von der Stellung des Trägers aktivieren, Anschläge enthalten, die einerseits mit dem Träger und andererseits mit der Betätigungsvorrichtung in Verbindung stehen. Diese Anschläge bewegen sich vorzugsweise konzentrisch um ein gemeinsames Lager, um das auch der Träger und ein mit der Betätigungsvortrichtung verbundener Arm schwenkbar sind.

In der Zeichnung ist ein nachfolgend näher beschriebenes Ausführungsbeispiel der Erfindung dargestellt. Es zeigt:
- Fig. 1: eine Rundballenpresse mit einer Umhüllungsvorrichtung,
- Fig. 2: die Umhüllungsvorrichtung in einem Ladezustand,
- Fig. 3: die Umhüllungsvorrichtng mit einer Hüllmittelrolle in einem geladenen Zustand,
- Fig. 4: die Umhüllungsvorrichtung mit der Hüllmittelrolle in betriebsmäßigem Zustand,
- Fig. 5: die Umhüllungsvorrichtung im Betriebszustand, und
- Fig. 6: eine Riegelbetätigungsvorrichtung.

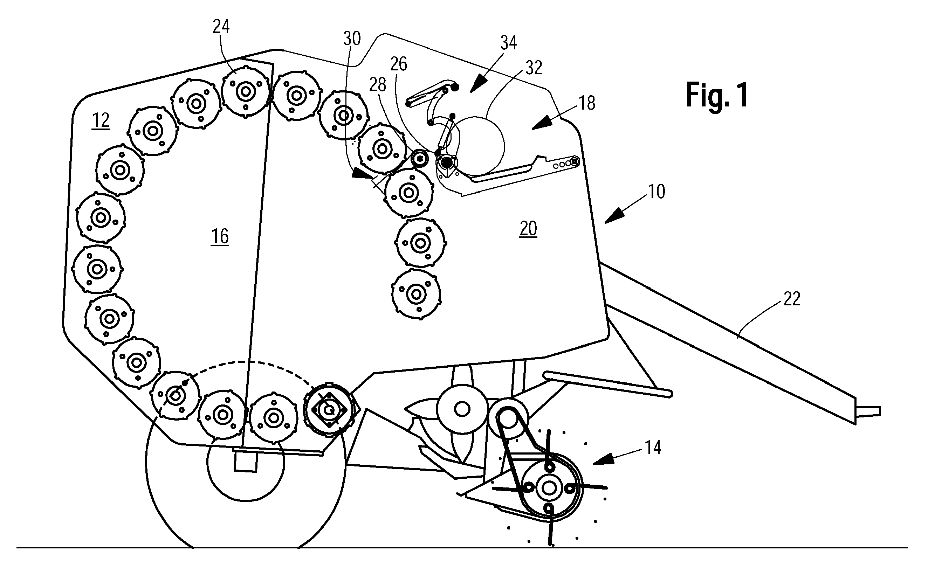

Eine in Figur 1 gezeigte Rundballenpresse 10 weist ein Fahrgestell 12, eine Erntegutzufuhrvorrichtung 14, eine Presskammer 16 und eine Umhüllungsvorrichtung 18 auf.

Die Rundballenpresse 10 steht hier stellvertretend für eine Presse, die ein Presserzeugnis liefert, das mit Hüllmittel umhüllt werden kann. Folglich kann es sich um eine landwirtschaftlich oder industriell einsetzbare Presse handeln, mit der Erntegut, Müll, Papier, Stoff, Baumwolle, Tabak, etc. insbesondere zu rundzylindrischen Ballen geformt werden kann. Die dargestellte Bauweise einer Festkammerpresse ist ebenfalls nur beispielhaft und kann durch eine Rundballenpresse 10 mit einer in der Größe variablen Presskammer 16 oder mit einer gemischten Bauweise ausgebildet sein. Grundsätzlich könnte die Umhüllungsvorrichtung 18 überall dort eingesetzt werden, wo es gilt, einen Gegenstand mit einem von einer Rolle abzuziehenden Hüllmittel zu bedecken, d.h. auch unabhängig von dem Vorhandensein einer Presse.

Das Fahrgestell 12 weist in nicht näher bezeichneter Weise einen Rahmen und eine Achse mit Rädern auf, an den Seitenwände 20 und eine Deichsel 22 angebracht sind, wie dies herkömmlich vorgenommen wird. Die Deichsel 22 erstreckt sich annähernd horizontal von dem vorderen Endbereich des Fahrgestells 12 zu einem nicht gezeigten Zugfahrzeug.

Die Erntegutzufuhrvorrichtung 14 steht stellvertretend für jegliche Vorrichtung, mit der zu pressendes Gut in die Presskammer 16 gespeist wird. Die Erntegutzufuhrvorrichtung 14 befindet sich unterhalb der Deichsel 22.

Die Presskammer 16 erstreckt sich zwischen den beiden Seitenwänden 20 und wird in diesem Fall von einer Vielzahl auf einem Kreis gelegener Walzen 24 umgeben, die allerdings im vorderen Bereich einen oberen Spalt für die Umhüllungsvorrichtung 18 und einen unteren Spalt für die Erntegutzufuhrvorrichtung 14 belassen.

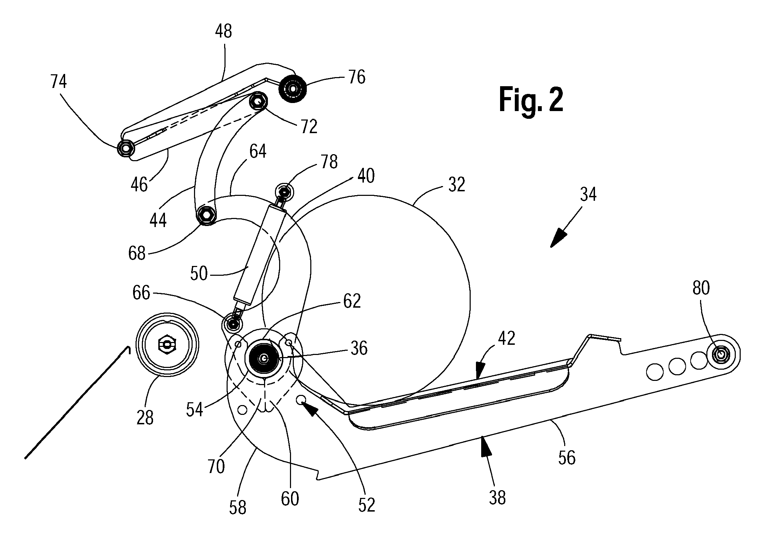

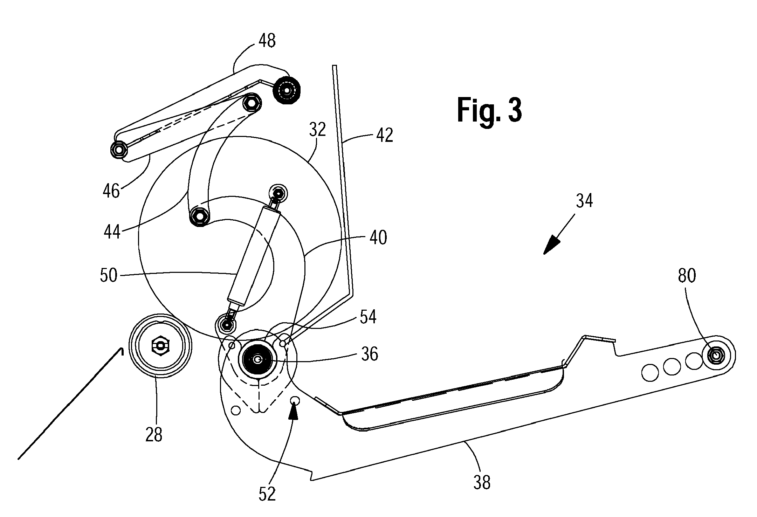

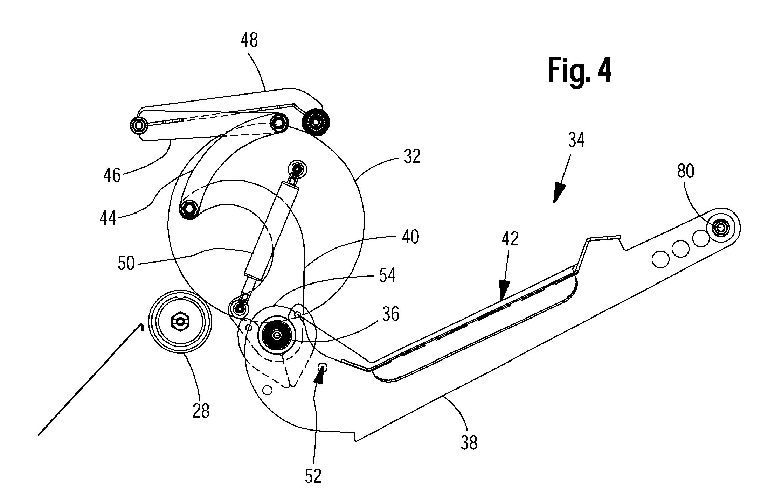

Die Umhüllungsvorrichtung 18 wird benutzt, um in die Presskammer 16 Hüllmittel 26 in der Form von Folie, Netz, Papier oder dergleichen einzuführen und um ein Presserzeugnis zu wickeln. Derartige Umhüllungsvorrichtungen 18 sind ihrer Art nach bekannt und können an fast beliebigen Stellen der Rundballenpresse 10 angeordnet werden; vorteilhafterweise ist ihre Unterbringung so gewählt, dass eine Bedienungsperson leicht Zugang zu ihr hat. In dem vorliegenden Fall befindet sich die Umhüllungsvorrichtung 18 im vorderen Bereich des Fahrgestells 12 oberhalb der Deichsel 22 und ist so ausgebildet, dass sie das Hüllmittel 26 durch einen Spalt - den oberen - zwischen zwei Walzen 24 in die Presskammer 16 abgibt. Im Bereich des Spalts befindet sich eine Rolle 28 zur Zufuhr von Hüllmittel 26 und eine Trennvorrichtung 30, um dieses zu trennen, wie dies hinlänglich bekannt ist. Das Hüllmittel 26 ist auf einer Hüllmittelrolle 32 aufgewickelt. Der Umhüllungsvorrichtung 18 ist auch eine Ladevorrichtung 34 zugeordnet, zu deren Beschreibung auf die Figuren 2 bis 6 verwiesen wird.

Figur 2 zeigt die Umhüllungsvorrichtung 18 und deren Ladevorrichtung 34 in einem Ladezustand, wobei in der Darstellung insbesondere folgende Komponenten zu erkennen sind: ein Lager 36, ein Träger 38, ein Arm 40, ein Zwischenrahmen 42, einen ersten Lenker 44, einen zweiten Lenker 46, einen Andrückarm 48, eine Betätigungsvorrichtung 50, einen Riegel 52 und eine Stützrolle 54.

Die Ladevorrichtung 34 ist so geschaffen und angeordnet, dass eine Hüllmittelrolle 32 relativ bequem von einer Bedienungsperson auf den Träger 38 bzw. dessen Zwischenrahmen 42 aufgelegt und insbesondere mittels oder unterstützt von der Betätigungsvorrichtung 50 in eine Betriebsstellung gebracht werden kann.

Das Lager 36 wird von einer/einem durchgehenden Welle, Zapfen oder dergleichen gebildet, die eine sich quer zur Fahrtrichtung erstreckende, waagrechte Schwenk- oder Drehachse definieren, die parallel zu, vor und ungefähr auf der Höhe der Drehachse der Rolle 28 verläuft.

Der Träger 38 kann aus Stahl oder Kunststoff hergestellt sein und ist ausreichend stark, um die Hüllmittelrolle 32 tragen zu können; üblicherweise ist er als ein Schweißzusammenbau gebildet, der sich im Wesentlichen zwischen den beiden Seitenwänden 20 erstreckt und um das Lager 36 vertikal schwenkbar ist. Der Träger 38 untergliedert sich in einen langen Tragschenkel 56 und einen kurzen Anschlußschenkel 58, die zusammen einstückig ausgebildet sind und im Wesentlichen unter einem rechten Winkel zueinander verlaufen. Die Länge des Trag- und des Anschlußschenkels 56 und 58 ist jeweils so gewählt, dass die Hüllmittelrolle 32 sowohl in der Lade- als auch in der Betriebsstellung von dem Träger 38 erfasst werden kann. In der Ladestellung ist der Tragschenkel 56 zu dem Anschlußschenkel 58 hin geneigt, so dass eine aufgelegte Hüllmittelrolle 32 nicht unbeabsichtigt herabrollen kann. An dem Anschlußschenkel 58 befindet sich ein Anschlag 60, der in der Stellung gemäß Figur 2 eine im Wesentlichen vertikal und zu dem Mittelpunkt des Lagers 36 radial verlaufende Anschlagfläche bietet. Der Anschlußschenkel 58 ist mit seinem freien Endbereich schwenkbar auf dem Lager 36 gehalten.

Der Arm 40 hat eine geschwungene Form ähnlich des oberen Teils eines Fragezeichens und weist im unteren Endbereich ein unteres Lager 62, am unteren Anfang eines Bogens 64 ein mittleres Lager 66 und am oberen Ende des Bogens 64 ein oberes Lager 68 auf. Schließlich ist auch an dem Arm 40 ein Anschlag 70 vorgesehen, dessen Anschlagfläche zu dem Mittelpunkt des Lagers 36 radial verläuft. Der Arm 40 ist als ein flaches Bauelement z. B. aus Flachstahl gebildet und jeweils an der Innen- oder Außenseite einer Seitenwand 20 vorgesehen. Jeder Arm 40 ist mit seinem unteren Lager 62 auf dem Lager 36 vertikal schwenkbar aufgenommen und kann soweit geschwenkt werden, dass die Innenseite des Bogens 64 die zugelegene Rolle 28 in sich aufnimmt. Das mittlere Lager 66 dient dem Anschluß des unteren Endbereichs der Betätigungsvorrichtung 50, und das obere Lager 68 dem Anschluß des ersten Lenkers 44. Alle Lager 62, 66, 68 liegen nahezu auf einer Linie und sind relativ einfach ausgebildet, z.B. mit Zapfen oder Schrauben in einer Bohrung. Der Anschlag 70 ist derart an dem Arm 40 befestigt oder ausgebildet, dass er in einer Stellung gemäß Figur 2 eine im Wesentlichen vertikale Anschlagfläche bietet, die mit der an dem Anschlag 60 zusammenfällt.

Der Zwischenrahmen 42 ist als eine geknickte Platte oder dergleichen ausgebildet, die abschnittsweise auf dem Träger 38 aufliegt, auf dem Lager 36 gehalten und um dieses schwenkbar ist. Der Zwischenrahmen 42 kann - wie dies nicht gezeigt ist - mit einem oder mehreren Griffen versehen sein, die es erleichtern, ihn zusammen mit einer auf ihm aufliegenden Hüllmittelrolle 32 nach oben zu schwenken. Der Zwischenrahmen 42 ist nicht unbedingt erforderlich, sondern ermöglicht es nur, die Hüllmittelrolle 32 ohne den Träger 38 in eine Betriebsstellung zu bringen. Zum Einlegen der Hüllmittelrolle 32 könnte zudem eine eigene oder die Betätigungsvorrichtung 50 verwendet werden.

Der erste Lenker 44 ist als ein leicht gekrümmtes Flacheisen ausgebildet, das einenends an dem Lager 68 des Arms 40 und anderenends in einem Lager 72 in einem Endbereich des zweiten Lenkers 46 gelenkig angreift. Auch hiervon ist ein Lenker 44 auf jeder Seite vorgesehen.

Der zweite Lenker 46 ist starr mit dem Andrückarm 48 verbunden und verläuft zu diesem unter einem sehr spitzen Winkel von ca. 15 Grad. Einenends ist der zweite Lenker 46 in dem Lager 72 mit dem ersten Lenker 44 verbunden und andererseits ist er auf einem Lager 74 vertikal schwenkbar gelagert, wobei das Lager 74 eine Schwenkachse definiert, die parallel zu der Schwenkachse des Lagers 36 aber wesentlich höher und rückwärtig von dieser verläuft. Das Lager 74 ist ortsfest an der Seitenwand oder dergleichen angeordnet.

Der Andrückarm 48 ist geringfügig länger ausgebildet als der zweite Lenker 46 und an seinem dem Lager 74 abgelegenen Endbereich mit einer Achse verbunden, auf der eine Rolle 76 vorzugsweise drehbar gelagert ist. Die Rolle 76 verläuft parallel zu der Rolle 28 und ist so angeordnet, dass sie auf die Umfangsfläche der Hüllmittelrolle 32 aufgesetzt werden kann.

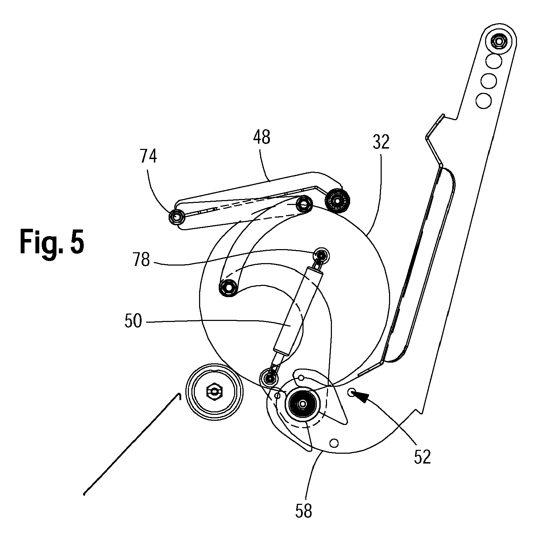

Die Betätigungsvorrichtung 50 ist in diesem Ausführungsbeispiel als eine Gasdruckfeder ausgebildet; alternativ könnte auch eine mechanische Feder, z.B. eine Schraubendruckfeder vorgesehen sein, oder gar ein Motor, z.B. ein Hydraulik- oder Elektromotor. Die Betätigungsvorrichtung 50 ist mit einem oberen Endbereich in einem Lager 78 an dem Fahrgestell 12 oder einer Seitenwand 20 und mit dem unteren Endbereich in dem mittleren Lager 66 gehalten; in jedem Betriebszustand erstreckt er sich nahezu senkrecht, wobei sich das mittlere Lager stets seitlich einer Geraden durch das Lager 78 und das untere Lager 36 befindet. Die Anordnung der Betätigungsvorrichtung 50 ist so gewählt, dass sie den Träger 38 stets aus der in Figur 2 gezeigten Lage nach oben zu der in Figur 5 gezeigten Lage drängt.

Der Riegel 52 wird in nicht gezeigter Weise von einem axial bewegbaren und in seinen Endlagen sicherbaren Bolzen oder dergleichen gebildet, der in der Seitenwand 20 gehalten wird und in eine Bohrung in dem Anschlußschenkel 58 einschiebbar oder aus dieser herausziehbar ist. Erstreckt sich der Bolzen in die Bohrung, wird der Träger 38 in der in Figur 2 gezeigten Lage gesichert, d.h. die Betätigungsvorrichtung 50 kann nicht wirksam werden.

Die Stützrolle 54 ist in der Art eines Rohrs aus Stahl oder Kunststoff gebildet und verläuft koaxial zu der Achse des Lagers 36. Die Stützrolle 54 ist drehbar auf dem Lager 36 gehalten und geeignet, gemeinsam mit der Rolle 28 die Hüllmittelrolle 32 zu stützen. Die Stützrolle 54 kann angetrieben, gebremst oder frei drehend ausgebildet sein.

Aus dem vorstehend Beschriebenen ergibt sich, dass eine Schwenkbewegung des Arms 40 um das Lager 36 aufgrund des ersten Lenkers 44 zugleich eine Schwenkbewegung des zweiten Lenkers 46 und des Andrückarms 48 um das Lager 74 bewirkt, was zum Ergebnis hat, dass sie die Rolle 76 auf die Hüllmittelrolle 32 absenkt oder sich von dieser abhebt. Diese Schwenkbewegung des Arms 40 wird in Richtung auf die Hüllmittelrolle 32 zu von der Betätigungsvorrichtung 50 ausgeführt, sobald der Träger 38 um das Lager 36 mit Blick auf die Zeichnung entgegen dem Uhrzeigerdrehsinn geschwenkt wird und sich somit die beiden Anschläge 60 und 70 voneinander abheben können. Wenn die Rolle 76 von der Hüllmittelrolle 32 abgehoben werden soll, z.B. um eine neue Hüllmittelrolle 32 einzulegen, wird der Träger 38 im Uhrzeigerdrehsinn um das Lager 36 nach unten geschwenkt, so dass der Anschlag 60 an dem Anschlag 70 zur Anlage kommt. Hierzu ist an dem Träger 38, und zwar an dem freien Ende des Tragschenkels 56 eine Stange 80 vorgesehen, die einer Bedienungsperson ein sicheres Ergreifen des Trägers 38 ermöglicht. Wenn der Träger 38 dann weiter bewegt wird, schwenkt er mittels des Anschlags 60 den Arm 70 um das Lager 36 und spannt dabei die Betätigungsvorrichtung 50. Zeitgleich drückt der Arm 40 über den ersten Lenker 44 den zweiten Lenker 46 und mit diesem den Anschlagarm 48 entgegen dem Uhrzeigerdrehsinn um das Lager 74 und hebt somit die Rolle 76 von der Hüllmittelrolle 32 ab. Es ist offensichtlich, dass diese Bewegung des Trägers 38 gegen den Widerstand der Betätigungsvorrichtung 50 sehr leicht und angenehm von einer Bedienungsperson geleistet werden kann, weil sie mittels ihres Gewichts eine hohe Zugkraft ausüben kann, die deren Rücken schont. In der abgesenkten Stellung des Trägers 38 kann eine neue Hüllmittelrolle 32 auf ihn aufgelegt werden. Diese kann mittels des Zwischenrahmens 42 auf die Rolle 28 und die Stützrolle 54 gerollt werden. Der Träger 38 wird mittels des Riegels 52 in seiner abgesenkten Stellung gehalten, bis dieser in seine nicht sichernde Stellung gebracht wird.

Schließlich kann durch das Aufwärtsschwenken des Trägers 38 die Rolle 76 abgesenkt und die Hüllmittelrolle 32 in ihrer Lage gesichert werden.

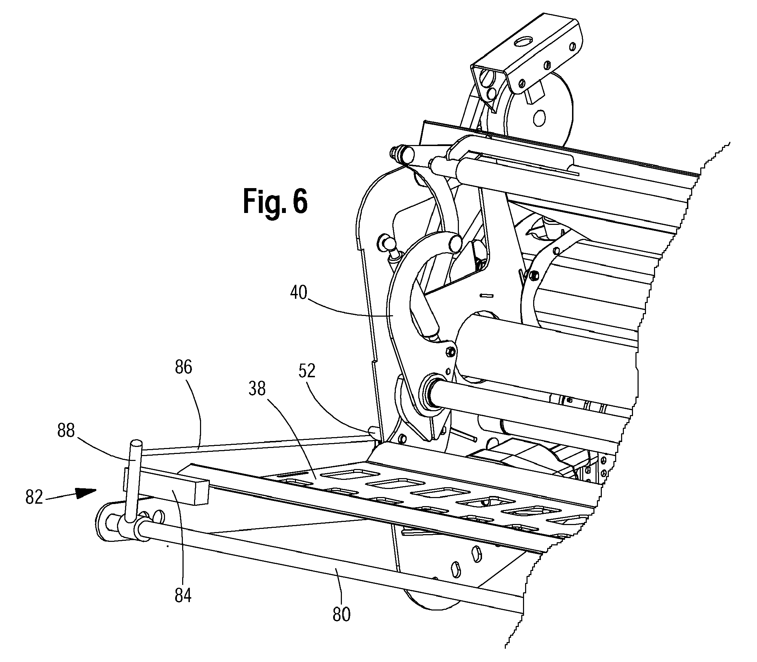

Figur 6 zeigt eine Weiterentwicklung des Riegels 52 dergestalt, dass am freien Ende des Tragschenkels 56 pro Riegel 52 eine Riegelbetätigungsvorrichtung 82 mit einem Griff 84 und einem Gestänge 86 vorgesehen ist. Die Riegelbetätigungsvorrichtung 82 dient dazu, den Riegel 52 zu deaktivieren, wenn der Träger 38 nach oben geschwenkt werden soll. Der Griff 84 ist in diesem Fall um die Stange 80 schwenkbar, auf dieser gelagert und kann gemeinsam mit der Stange 80 ergriffen werden, was das Entriegeln und anschließende Aufschwenken des Trägers 38 ermöglicht. Der Griff 84 ist mit einem zu der Stange 80 radial verlaufenden Schenkel 88 versehen, an dessen freiem Endbereich das Gestänge 86 beweglich angreift. Das Gestänge 86 selbst ist vorzugsweise auf Zug und Druck belastbar und z.B. als eine einfache Stange ausgebildet, die einenends mit dem Griff 84 und anderenends mit dem Riegel 52 verbunden ist. Der Riegel 52 ist in diesem Ausführungsbeispiel so ausgebildet, dass eine ihm erteilte Drehbewegung in eine axiale Bewegung umgesetzt wird, wie dies einerseits bekannt ist und die andererseits die Verbindung zwischen dem Träger 38 und der Seitenwand 20 oder dem Fahrgestell 12 herstellt oder unterbricht. Es ist auch denkbar, den Riegel 52 und gegebenenfalls die Riegelbetätigungsvorrichtung 82 nicht nur in der unteren Endstellung des Trägers 38 zu benutzen, sondern auch in einer oberen Endstellung eine Verriegelung durchzuführen. Selbstverständlich steht diese Art eines Riegels 52 und einer Riegelbetätigungsvorrichtung 82 nur stellvertretend für jegliche Art von Riegel und Riegelbetätigungsvorrichtung. So könnte ein Riegel auch mechanisch, mittels Feder, Strom, Drucköl oder Druckluft betätigt werden. Desgleichen könnte die Riegelbetätigungsvorrichtung wie eine Ratsche oder dergleichen ausgebildet werden, die dadurch betätigt wird, dass der Träger 38 geringfügig über seine Endstellung hinaus bewegt und damit der Riegel betätigt wird.

## Patentansprüche

1. Ladevorrichtung (34) einer Umhüllungsvorrichtung (18), insbesondere einer Rundballenpresse (10), für eine Hüllmittelrolle (32) mit:
a) einem Träger (38) zur Aufnahme der Hüllmittelrolle (32), der zwischen einer Ladestellung und einer Betriebsstellung bewegbar ist,
b) einer Betätigungsvorrichtung (50), die geeignet ist, die Umhüllungsvorrichtung (18) in einen Zustand zu versetzen, in dem Hüllmittel (26) von der Hüllmittelrolle (32) abgenommen werden kann,
c) Mitteln, die die Betätigungsvorrichtung (50) abhängig von der Stellung des Trägers (38) aktivieren.

2. Ladevorrichtung nach Anspruch 1, **dadurch gekennzeichnet, dass** der Träger (38) manuell oder motorisch bewegt werden kann.

3. Ladevorrichtung nach Anspruch 1 oder 2, **dadurch gekennzeichnet, dass** die Betätigungsvorrichtung (50) als eine Feder, insbesondere als eine Gasdruckfeder ausgebildet ist.

4. Ladevorrichtung nach einem oder mehreren der vorherigen Ansprüche, **dadurch gekennzeichnet, dass** der Träger (38) einen Zwischenrahmen (42) aufweist, der manuell oder motorisch bewegbar ist.

5. Ladevorrichtung nach einem oder mehreren der vorherigen Ansprüche, **dadurch gekennzeichnet, dass** die Umhüllungsvorrichtung (18) ein Gestänge und wenigstens eine Rolle (76) aufweist, die von der Betätigungsvorrichtung (50) beaufschlagt werden.

6. Ladevorrichtung nach einem oder mehreren der vorherigen Ansprüche, **dadurch gekennzeichnet, dass** der Träger (38) mittels eines Riegels (52) in wenigstens einer Endstellung sicherbar ist.

7. Ladevorrichtung nach einem oder mehreren der vorherigen Ansprüche, **dadurch gekennzeichnet, dass** der Riegel (52) mittels einer Riegelbetätigungsvorrichtung (82) aktivierbar und/oder deaktivierbar ist.

8. Ladevorrichtung nach einem oder mehreren der vorherigen Ansprüche, **dadurch gekennzeichnet, dass** die Mittel, die die Betätigungsvorrichtung (50) abhängig von der Stellung des Trägers (38 aktivieren, Anschläge (60, 70) enthalten, die einerseits mit dem Träger (38) und andererseits mit der Betätigungsvorrichtung (50) in Verbindung stehen und insbesondere um ein gemeinsames Lager (36) schwenkbar sind.
